# EUROPÄISCHE PATENTANMELDUNG

(11) **EP 1 700 547 A1**
(43) Veröffentlichungstag der Anmeldung: **13.09.2006**
(21) Anmeldenummer: 05104042.6
(22) Anmeldetag: 13.05.2005
(51) Int. Cl.: A47J 27/212

(54) **Vorrichtung zur Erhitzung einer Flüssigkeit**

(30) Priorität: 07.03.2005 DE 102005010806
(71) Anmelder: Vincero Holding GmbH, 33818 Leopoldshöhe (DE)
(72) Erfinder: Hoffmann, Raphael, 22607 Hamburg (DE)
(74) Vertreter: Dantz, Jan Henning

(57) **Zusammenfassung**

Eine Vorrichtung zur Erhitzung einer Flüssigkeit, insbesondere von Wasser, umfasst einen Behälter (1), in dem ein Heizelement (10) und mindestens ein Leuchtmittel (30) für eine Betriebsanzeige angeordnet ist. Der Behälter (1) besteht dabei zumindest teilweise aus transparentem und/oder transluzentem Material und es sind Leuchtmittel (30) vorgesehen, die über mindestens eine Linse (18) zerstreutes Licht in die Flüssigkeit einstrahlen. Die Linse (18) kann dabei in einen Zwischenboden (9, 10) in dem Behälter (1) angeordnet sein. Dadurch kann eine Temperatur der Flüssigkeit in dem Behälter (1) über die Farbgebung der Leuchtmittel (30) visualisiert werden.

## Beschreibung

Die vorliegende Erfindung betrifft eine Vorrichtung zur Erhitzung einer Flüssigkeit, insbesondere von Wasser, mit einem Behälter, in dem ein Heizelement und mindestens ein Leuchtmittel für eine Betriebsanzeige angeordnet ist, wobei der Behälter zumindest teilweise aus transparentem und/oder transluzentem Material besteht.

Aus der DE 196 52 829 ist ein elektrisches Haushaltsgerät mit Betriebsanzeige bekannt, bei dem eine Leuchtvorrichtung mit einer im Gehäuse integrierten Lampe vorgesehen ist, die Licht in einen Lichtleiter abgibt, damit das Licht umfangsseitig an dem Behälter austritt und somit eine Betriebsanzeige bildet. Darüber hinaus lässt sich mit dem Licht keine weitere Information übermitteln, beispielsweise die Temperatur der Flüssigkeit. Insofern ist der Nutzen einer solchen Betriebsanzeige und auch der optische Effekt begrenzt.

Ferner ist aus der GB 23 63 972 ein Wasserkocher bekannt, bei dem innerhalb des Behälters eine Lichtquelle zur Anzeige des Flüssigkeitspegels angeordnet ist. Dabei ist der Behälter teilweise aus transparentem Material gebildet, sodass von außen der Flüssigkeitsstand durch die Beleuchtung gut sichtbar ist. Es hat sich jedoch heherausgestellt, dass gerade bei Einsatz von farbigem Licht die Farbgebung nur schwach reflektiert wird und keine gute Ausleuchtung in dem Behälter erreicht wird. Das Licht ist dabei oberhalb des Flüssigkeitspegels angeordnet und es wird im Wesentlichen nur die Oberfläche der Flüssigkeit bestrahlt.

Es ist daher Aufgabe der vorliegenden Erfmdung eine Vorrichtung zur Erhitzung einer Flüssigkeit zu schaffen, die eine gut sichtbare Betriebsanzeige aufweist und einfach aufgebaut ist.

Diese Aufgabe wird mit einer Vorrichtung zur Erhitzung einer Flüssigkeit mit den Merkmalen des Anspruches 1 gelöst.

Erfindungsgemäß strahlen die Leuchtmittel über eine Linse zerstreutes Licht in die Flüssigkeit ein, sodass der Behälter innen großflächig ausgeleuchtet ist, sodass eine von außen gut sichtbare Betriebsanzeige vorhanden ist. Neben dieser Funktion sieht der innen ausgestrahlte Behälter auch optisch ansprechend aus, wobei die Leuchtmittel ein oder mehrere Farben in den Behälter abgeben können. Dabei ist die Vorrichtung vergleichsweise einfach aufgebaut, da die Leuchtmittel in dem stromführenden unteren Bereich des Behälters angeordnet sind und keine Leitungen in den Deckelbereich verlegt sein müssen.

Gemäß einer bevorzugten Ausgestaltung der Erfmdung ist die Linse in einem Zwischenboden in dem Behälter vorgesehen. Dadurch kann die Beleuchtung mittig von unten in dem Behälter erfolgen, um eine besonders gleichmäßige Verteilung des Lichtes zu erhalten. Für einen einfachen Aufbau sind die Leuchtmittel aus mehreren auf einer Platine montierten Dioden gebildet, die dann einzeln oder gemeinsam angesteuert werden können. Ferner kann auf der Platine ein Thermalelement zur Temperaturerfassung vorgesehen sein, sodass sich über eine einfach aufgebaute Schaltung mit einem Mikrocontroller die Leuchtmittel abhängig von der Temperatur ansteuern lassen. Dadurch kann mittels der Leuchtmittel eine Temperaturänderung durch unterschiedliche Farben visualisierbar gemacht werden.

Vorzugsweise sind drei unterschiedlich farbige Dioden als Leuchtmittel vorgesehen, die in Abhängigkeit von der erfassten Temperatur über einen Mikrocontroller gesteuert werden. Der Benutzer kann über die Farbe eine Mitteilung über die Temperatur der Flüssigkeit erhalten, sodass auch von einer gewissen Distanz aus Betriebszustand und Temperatur erkennbar sind.

Für eine effektive Erhitzung ist als Heizelement eine an einem Zwischenboden angeordnete Heizplatte vorgesehen. Durch den Zwischenboden wird der Behälter in einen oberen Bereich mit einer Flüssigkeitsaufnahme unterteilt, die vorzugsweise aus transparentem oder transluzentem Material gebildet ist. Darunter ist ein Gehäuseunterteil aus blickdichtem Material vorgesehen, in dem die Heiz- und Steuerungselemente untergebracht sind.

Die Erfmdung wird nachfolgend anhand eines Ausführungsbeispieles mit Bezug auf die beigefügten Zeichnungen näher erläutert. Es zeigen:

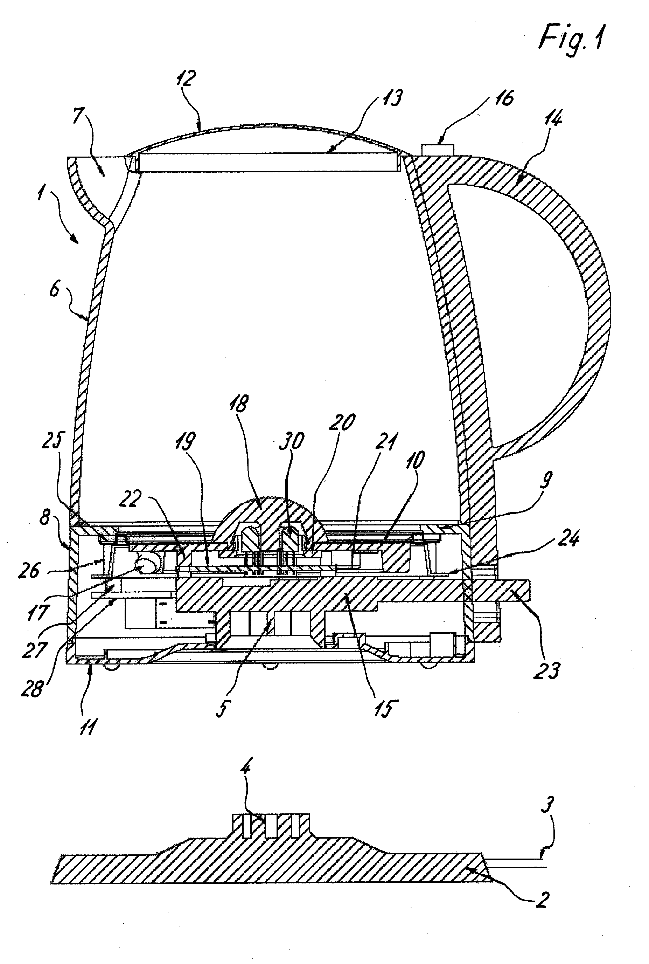

- Figur 1: eine geschnittene Seitenansicht eines Ausführungsbeispieles einer erfindungsgemäßen Vorrichtung zur Erhitzung einer Flüssigkeit, und
- Figur 2: ein Schaltbild der Vorrichtung der Figur 1.

Eine Vorrichtung zur Erhitzung einer Flüssigkeit umfasst einen Behälter 1, der in einem Innenraum eine Aufnahme für eine Flüssigkeit ausbildet. Der Behälter 1 ist auf einem Sockel 2 abstellbar, wobei der Sockel 2 über eine elektrische Leitung 3 mit dem Stromnetz verbunden und versorgt ist. An dem Sockel 2 ist eine Steckverbindung 4 ausgebildet, die mit einer Buchse 5 an der Unterseite des Behälters 1 zusammenwirkt, um diesen mit Strom zu versorgen.

Der Behälter 1 umfasst ein Gehäuse, das aus einem Oberteil 6 aus einem transparentem oder transluzentem Kunststoffmaterial gebildet ist und ein Unterteil 8, das aus einem blickdichten Material besteht. An dem Oberteil 6 ist eine Ausgießschnaupe 7 angeformt, um die Flüssigkeit aus dem Behälter sicher ausgießen zu können. Das Oberteil 6 und das Unterteil 8 sind dicht miteinander verbunden, wobei im Verbindungsbereich ein radial nach innen hervorstehender Zwischenboden 9 ausgebildet ist, der mittig für die Aufnahme einer Heizplatte 10 ausgespart ist. Zwischen dem Zwischenboden 9 und der Heizplatte 10 ist eine Dichtung 25 angeordnet, sodass in dem Behälter 1 bzw. dem Oberteil 6 angeordnete Flüssigkeit nicht in das Unterteil 8 eindringen kann.

Das Unterteil 8 weist eine Bodenplatte 11 auf, an der die Buchse 5 mit einem Schaltmodul 15 festgelegt ist.

Das Oberteil 6 ist mit einem Deckel 12 verschlossen, welcher in der Innenseite mit einem reflektierenden metallischen Folienmaterial 13, beispielsweise mit Blech ausgekleidet ist. Ferner ist ein Griff 14 an dem Oberteil 6 vorgesehen, an dem ein Druckknopf 16 zum Öffnen des Deckels 12 gegenüber der Ausgießschnaupe 7 angeordnet ist.

Der Boden des Behälters 1 wird durch die Zwischenwand 9 und die Heizplatte 10 gebildet, wobei die Heizplatte 10 durch ein ringförmig angeordnetes elektrisches Heizelement 17 beheizbar ist. In der Mitte der Heizplatte 10 befindet sich eine Öffnung, in der eine Linse 18 zur Zerstreuung von Licht angeordnet ist. In der Linse 18 sind Leuchtdioden 30 vorgesehen, die auf einer Platine 19 montiert sind. Die Linse 18 ist dabei über einen Clip 20 mit der Heizplatte 10 verbunden. Auf der Platine 19 ist ferner ein Thermoelement 21 zur Temperaturerfassung vorgesehen. Das Thermoelement 21 wird beim Verschrauben der Platine 19 an einem Schraubdom 22 der Heizplatte 10 positioniert. Es können auch mehrere Thermoelemente an der Platine oder an anderen Stellen vorgesehen sein, mit denen ggfs. unterschiedliche Temperaturbereiche erfasst werden.

Das Schaltmodul 15 umfasst die Buchse 5 zur Stromaufnahme, einen Schalter 23, welcher durch eine Aussparung im Unterteil des Griffes 14 zur manuellen Betätigung von außen zugänglich ist, die Stromzufuhr für das Heizelement 17 sowie einen aus zwei Bimetallelementen bestehenden Abschaltmechanismus. Ferner ist in dem Schaltmodul 15 eine mechanische Abfrage in Form eines Tasters, welcher mit dem Abschaltmechanismus verbunden ist, zur Überprüfung der Verbindung zwischen Buchse 5 und Stecker 4 des Sockels 2 integriert, welche bei fehlerhafter Platzierung des Behälters 1 auf dem Sockel 2 einer fehlerhaften Verbindung das Inbetriebnehmen der Heizplatte 10 verhindert. Das Schaltmodul 15 wird zusammen mit Distanzstücken, der Platine 19 und dem Thermoelement 21 über die Schraubdome mit der Heizplatte 10 verschraubt.

Die Heizplatte 10 wird mit zwei Halterungen 24 über in dem Unterteil 8 integrierte Schraubdome 26 mit der zwischen Heizplatte 10 und Zwischenboden 9 positionierten Dichtung 25 verschraubt. In dieser Verschraubung wird über Distanzstücke 27 einseitig eine zweite Platine 28, welche den Mikrocontroller und weitere Bauelemente umfasst, integriert. Über ein Flachbandkabel werden die Platine 19 und 28 verbunden, wobei natürlich auch nur eine Platine 19 vorgesehen sein kann.

Zur Erhitzung der in dem Behälter 1 angeordneten Flüssigkeit wird der Schalter 23 betätigt und die Platinen 19 und 18 mit Strom versorgt, wodurch die aus drei Dioden gebildete Leuchtvorrichtung 30 aktiviert wird. In der Anfangsphase können die Dioden 30 ein blaues Licht abgeben, um dem Benutzer eine niedrige Temperatur zu signalisieren.

Im Laufe der Erhitzung der Flüssigkeit kann aufgrund einer Temperaturerfassung über den Mikrocontroller die Farbgebung durch die Leuchtdioden verändert werden, beispielsweise über gelb zu rot hin, um eine heiße Flüssigkeit in dem Behälter 1 anzuzeigen. Die Übergänge können dabei stufenlos über die Leuchtdioden visualisiert werden, wobei auch andere Farben und Farbübergange gewählt werden können. Bei Erreichen einer bestimmten Höchsttemperatur wird der Heizvorgang durch die Bimetallelemente des Schaltmoduls 15 automatisch unterbrochen. Ferner wird der Heizvorgang beim manuellen Abschalten und beim Abheben des Behälters 1 von dem Sockel 2 unterbrochen.

Es besteht die Möglichkeit, die Leuchtvorrichtung mit den Dioden 30 über einen Akku auch nach Abheben des Behälters 1 weiter leuchten zu lassen. Dann ist über die Farbgebung eine ständige visuelle Kontrolle der Flüssigkeitstemperatur durch den Benutzer möglich.

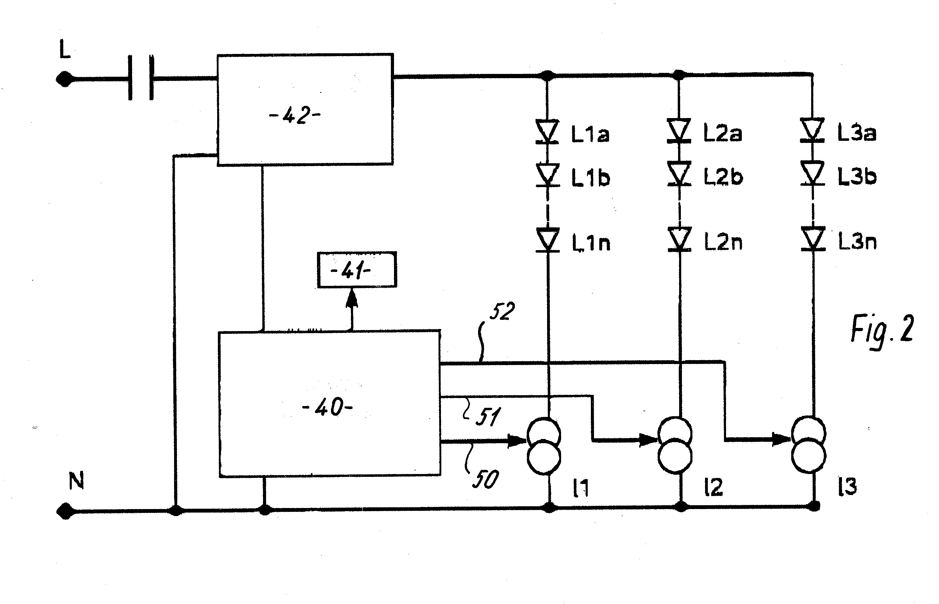

In Figur 2 ist die elektrische Schaltung der Heizeinrichtung dargestellt. Ein Mikrocontroller 40 ist mit einem als temperaturabhängigen Widerstand ausgebildeten Temperaturfühler 41 verbunden, um in regelmäßigen Abständen eine Temperaturerfassung durchzuführen. Der Mikrocontroller 40 steuert über Leitungen 50, 51 und 52 die Stromquellen, L 1, L2 und L3, um die Dioden L 1 a bis L3n anzusteuern. Die einzelnen Dioden L1a bis L3n sind durch einzelne Stromquellen L 1 bis L3 angesteuert, um Schwankungen der Helligkeit von einzelnen LED und bei der Modulation zu reduzieren. Die Schaltung wird direkt von der Netzspannung versorgt.

Der Temperaturfühler 41 ist nicht direkt im Wasser platziert, sondern an dem Boden der Heizplatte 10 vorgesehen. Eine Differenz der Temperatur wird durch eine Kompensation ausgeglichen, so dass die Temperatur der Flüssigkeit mit einer ausreichenden Genauigkeit erfassbar ist.

In dem dargestellten Ausführungsbeispiel ist eine Linse 18 mittig am Boden des Oberteils 6 des Behälters angeordnet. Die Linse 18 kann dabei eine aufgerauhte Oberfläche aufweisen, um durch Lichtbrechung eine besonders gute Ausleuchtung des Behälters 1 zu erreichen. Ferner ist es möglich, mehrere Linsen 18 am Zwischenboden vorzusehen, beispielsweise eine Linse pro Leuchtmittel. Dabei können besondere optische Effekte erzeugt werden, wenn die Leuchtmittel nacheinander aufgrund einer Temperaturänderung aktiviert werden, wobei die Ausleuchtung des Behälters durch die einzelnen Leuchtmittel und Linsen unterschiedliche gestaltet sein kann.

Die Wände des Oberteils 6 können ebenfalls leicht profiliert sein, um am Umfang des Oberteils ebenfalls eine Lichtbrechung zu erhalten. Ferner können transparente bzw. transluzente Stellen und blickdichte Stellen abwechselnd vorgesehen sein, um ein spezielles Muster am Außenumfang des Behälters 1 abzubilden.

## Patentansprüche

1. Vorrichtung zur Erhitzung einer Flüssigkeit, insbesondere von Wasser, mit einem Behälter (1), in dem ein Heizelement (10) und mindestens ein Leuchtmittel (30) für eine Betriebsanzeige angeordnet ist, wobei der Behälter (1) zumindest teilweise aus transparentem und/oder transluzentem Material besteht, **dadurch gekennzeichnet, dass** die Leuchtmittel über mindestens eine Linse (18) zerstreutes Licht in die Flüssigkeit einstrahlen.

2. Vorrichtung nach Anspruch 1, **dadurch gekennzeichnet, dass** die mindestens eine Linse (18) in einem Zwischenboden (9, 10) in dem Behälter (1) vorgesehen ist.

3. Vorrichtung nach Anspruch 1 oder 2, **dadurch gekennzeichnet, dass** die Leuchtmittel (30) aus mehreren auf einer Platine (19) montierten Dioden gebildet sind.

4. Vorrichtung nach Anspruch 3, **dadurch gekennzeichnet, dass** auf der Platine (19) mindestens ein Thermoelement zur Temperaturerfassung vorgesehen ist.

5. Vorrichtung nach einem der Ansprüche 1 bis 4, **dadurch gekennzeichnet, dass** mittels der Leuchtmittel (30) eine Temperaturänderung durch unterschiedliche Farben visualisierbar ist.

6. Vorrichtung nach einem der Ansprüche 1 bis 5, **dadurch gekennzeichnet, dass** drei farbige Dioden (30) als Leuchtmittel vorgesehen sind, die in Abhängigkeit von der erfassten Temperatur über einen Mikrocontroller (40) gesteuert werden.

7. Vorrichtung nach einem der Ansprüche 1 bis 6, **dadurch gekennzeichnet, dass** als Heizelement eine an einem Zwischenboden (9) angeordnete Heizplatte (10) vorgesehen ist.

8. Vorrichtung nach einem der Ansprüche 1 bis 7, **dadurch gekennzeichnet, dass** der Behälter (1) zumindest im Bereich der Flüssigkeitsaufnahme aus transparentem oder transluzenten Material gebildet ist und ein Gehäuseunterteil (8) aus blickdichtem Material gebildet ist.
